# EUROPÄISCHE PATENTSCHRIFT

(11) **EP 1 837 524 B1**
(45) Veröffentlichungstag und Bekanntmachung des Hinweises auf die Patenterteilung: **01.10.2008**
(21) Anmeldenummer: 06006166.0
(22) Anmeldetag: 24.03.2006
(51) Int. Cl.: F04C 13/00, F04C 15/00

(54) **Flügelzellenpumpe**
Vane pump
Pompe à palettes

(43) Veröffentlichungstag der Anmeldung: 26.09.2007
(73) Patentinhaber: Albert Handtmann Maschinenfabrik GmbH & Co. KG, 88400 Biberach (DE)
(72) Erfinder: Maile, Bernd, 88422 Oggelshausen (DE); Mantz, Paul, 89584 Ehingen (DE); Staudenrausch, Martin, 88400 Biberach (DE)
(74) Vertreter: Grünecker, Kinkeldey, Stockmair & Schwanhäusser Anwaltssozietät

(56) Entgegenhaltungen:
- DE-A1- 10 319 912
- FR-A- 1 034 534

## Beschreibung

Die Erfindung betrifft eine Flügelzellenpumpe gemäß dem Oberbegriff des Anspruchs 1.

Eine solche Flügelzellenpumpe ist bereits aus der Druckschrift FR-A-1034534 bekannt. Diese Pumpe weist im Dichtbereich zwischen Saug- und Druckbereich ein Dichtelement zum Abdichten des Spaltes zwischen Rotor und der Wandung des Pumpengehäuses auf.

Auch aus der DE 103 19 912 A1 ist eine ähnliche Flügelzellenpumpe bekannt.

Flügelzellenpumpen werden bereits zum Fördern von Wurstbrät aus Trichtern in Füllrohre, über die Wursthüllen mit dem Wurstbrät gefüllt werden, eingesetzt. Solche Flügelzellenpumpen sind beispielsweise bereits in der EP 0432388B2 und der EP 1040758A1 beschrieben. Flügelzellenpumpen bestehen aus einem Pumpengehäuse und einem darin exzentrisch angeordneten in Drehung versetzbaren Rotor. In dem Rotor sind radial verschiebbar gelagerte Flügel angeordnet, die mit der Wandung des Pumpengehäuses, dem Boden und dem Deckel des Gehäuses und der Außenfläche des Rotors Förderzellen bilden und im abdichtenden Sinn zusammenwirken. Das Pumpengehäuse weist einen Bräteinlass und einen Brätauslass auf. Der Bereich nach dem Einlass bis nach dem Auslass entspricht dem Druckbereich der Pumpe. Im Auslassbereich befindet sich die jeweilige Flügelzelle mit dem Auslass in Verbindung, so dass die pastöse Masse aus der Flügelzelle beispielsweise in das Füllrohr geschoben werden kann. In Drehrichtung nach dem Auslass befindet sich der Dichtbereich, der den Druckbereich vom Saugbereich trennt.

Bei bisherigen Lösungen von Flügelzellenpumpen wird der Druckbereich durch einen zwischen Rotor und Pumpengehäuse erzeugten Dichtspalt vom Saugbereich getrennt. Der Dichtspalt, der sich zwischen Rotor und Gehäuse ergibt, liegt im Bereich von wenigen Hundertstel Millimeter. Der Dichtspalt und die Dichtfunktion sind dabei von der Geometrie, sowie den vorhandenen Toleranzen der Förderwerksteile abhängig. Zusätzlich wirken sich Verschleiß und unterschiedliche Betriebsparameter, wie Förderdruck, Produktkonsistenz etc. nachteilig auf die Gleichmäßigkeit der Förderleistung aus.

Bei hohen Drücken im Druckbereich vergrößert sich der Dichtspalt z.B. infolge von elastischen Verformungen. Aufgrund dessen, dass der Druckabfall im Dichtspalt proportional zur dritten Potenz der Spaltbreite s ist, d.h. Δp ~ s³, haben variierende Dichtspalte enormen Einfluss auf die Leckageströme und somit auf die Portioniergenauigkeit des Förderwerks. Zusätzlich ist die Dichtwirkung abhängig von der wirksamen Länge des Dichtbereiches.

Bei sich verschlechternder Dichtwirkung nimmt die vom Druck- in den Saugbereich überströmende Leckmasse zu. Diese Leckmasse kann dadurch in den Bereich eines Vakuumansatzes, der im Pumpengehäuse vorgesehen ist, geraten und weiter in Richtung Vakuumpumpe strömen. Brätablagerungen im Bereich des Vakuumansatzes bzw. im Ansaugkanal zur Vakuumpumpe können zu einer Verstopfung des Kanals oder zu einer Beschädigung der Vakuumpumpe führen.

Durch die Spaltbreitenproblematik kann auch der Evakuierungsgrad des Produktes nicht gezielt beeinflusst werden. Die Leckagemenge und damit die Portioniergenauigkeit ist also abhängig vom Verschleißzustand der Förderwerkskomponenten und von verschiedenen Betriebsparametern, wie Förderdruck, Produktkonsistenz etc. Bei zunehmendem Verschleiß und damit nachlassender Dichtfunktion müssen teuere Förderwerksteile ausgetauscht werden, wie Rotor, Pumpengehäuse, Pumpenflügel etc., um eine ausreichende Dichtfunktion zu gewährleisten.

Hiervon ausgehend liegt der vorliegenden Erfindung die Aufgabe zugrunde, eine Flügelzellenpumpe bereitzustellen, die eine exakte Förderleistung und somit Portioniergenauigkeit mit sich bringt, und die darüber hinaus eine verlängerte Lebensdauer ermöglicht.

Erfindungsgemäß wird diese Aufgabe durch die Merkmale des Anspruchs 1 gelöst.

Gemäß der Erfindung weist die Flügelzellenpumpe im Dichtbereich im Gehäuse vorzugsweise einen Vakuumansatz auf, wobei mindestens ein Dichtelement in Drehrichtung vor dem Vakuumansatz angeordnet ist, um die Vakuumpumpe vor schädlicher Leckmasse zu schützen.

Dadurch, dass im Dichtbereich mindestens ein Dichtelement zum Abdichten eines Spaltes zwischen Rotor und Wandung des Pumpengehäuses vorgesehen ist, kann die Dichtfunktion zwischen Druck- und Saugbereich verbessert werden. Neben der Dichteigenschaft weist das Dichtelement weiter den Vorteil auf, dass es die an den Umfangsflächen des Rotors mitgeführte Masse abstreift, so dass diese nicht in Richtung Saugbereich weiter gefördert werden kann. Somit kann auch verhindert werden, dass mitgeführte Masse gegebenenfalls in den Vakuumansatz eindringen kann. Die Dichtfunktion ist hier nicht mehr abhängig von der Geometrie sowie den vorhandenen Toleranzen der Förderwerkteile. Auch bei hohen Drücken im Druckbereich ist eine ausreichende Dichtung gegeben. Die Leckageströme können verringert werden und somit kann die Genauigkeit der Förderleistung, bzw. die Portioniergenauigkeit der Pumpe auch bei unterschiedlichsten Betriebsbedingungen erhöht werden. Durch das Dichtelement kann die maximal mögliche Druckdifferenz zwischen Druck- und Saugbereich aufrechterhalten werden.

Vorteilhafterweise ist das Dichtelement aus einem weicheren und/oder elastischeren Material als das Gehäuse, die Flügel und der Rotor gebildet, so dass eine perfekte Dichtfunktion gegeben ist und das Dichtelement als kostengünstiges Verschleißteil dient.

Gemäß einer bevorzugten Ausführungsform der vorliegenden Erfindung weist das Gehäuse eine Aussparung auf, in die das Dichtelement auswechselbar eingefügt ist. Somit kann beim Verschleiß von Förderwerksteilen das Dichtelement einfach und kostengünstig ausgetauscht werden. Dadurch lässt sich je nach Anwendung die Lebensdauer der Pumpe erhöhen und eine ausreichende Dichtung gewährleisten. Dadurch, dass sich das Dichtelement an die Rotorgeometrie anpassen lässt, kann weitgehend unabhängig vom Verschleißzustand der Förderwerksteile eine hohe Genauigkeit der Förderleistung der Pumpe, bzw. sehr genaue Portionsgewichte erreicht werden.

Vorteilhafterweise weist das Dichtelement einen Leckagekanal auf, der zumindest teilweise in Richtung Rotor geöffnet ist. Dieser Leckagekanal dient zum Abführen von pastöser Masse, die an den Umfangsflächen des Rotors mitgeführt wird. Somit kann selbst die Masse, die nicht von dem Dichtelement abgestreift wurde und dennoch mitgeführt wurde, durch den Leckagekanal abgeführt werden, wodurch verhindert wird, dass diese mitgenommene pastöse Masse in Richtung Saugbereich getragen wird und beispielsweise zum Vakuumansatz gelangt. Somit kann wirksam eine Beeinträchtigung der Funktion, bzw. eine Schädigung der Vakuumpumpe verhindert werden.

Vorteilhafterweise steht der Kanal in dem Dichtelement mit einem Leckagekanal in einer Seitenscheibe, die das Gehäuse abdeckt, oder mit einem Kanal im Gehäuse in Verbindung, durch den das mitgeführte Gut abgeführt werden kann.

Gemäß der vorliegenden Erfindung weist das Dichtelement n-Dichtflächen oder Dichtlippen und n-1 dazwischen liegende Leckagekanäle auf, wobei n ∈ IN.

Dadurch, dass das Dichtelement austauschbar ist, kann es beispielsweise auch leicht gereinigt werden.

Vorteilhafterweise ist in Drehrichtung nach dem Vakuumansatz mindestens ein weiteres Dichtelement vorgesehen, um eine ausreichende Dichtung zwischen Vakuumansatz und Saugbereich der Pumpe zu gewährleisten.

Der Dichtbereich umfasst dabei beispielsweise folgenden Aufbau:
einen ersten Dichtabschnitt mit einem ersten Dichtspalt, der zwischen Rotor und Wandung des Gehäuses gebildet ist, einen zweiten Dichtabschnitt mit mindestens einem ersten Dichtelement, einen dritten Dichtabschnitt mit einem zweiten Dichtspalt zwischen Rotor und Wandung des Gehäuses, und einen vierten Dichtabschnitt, der mindestens ein weiteres Dichtelement umfasst. In dieser Anordnung ist der Vakuumansatz im dritten Dichtabschnitt angeordnet.

Die Höhe h des Dichtelementes entspricht vorzugsweise der Höhe des Rotors und/oder der Pumpenflügel, um eine ideale Abdichtung zu realisieren.

Durch den Einsatz des erfindungsgemäßen Dichtelementes kann die Spaltbreite s im Vergleich zum Stand der Technik größer gewählt werden.

Die Dichtwirkung hängt von der Länge der Dichtflächen ab. Dadurch, dass die Spaltbreite s mit dem erfindungsgemäßen Dichtelement frei gewählt und somit eingeschränkt werden kann, kann die Länge des Dichtbereiches im Vergleich zum Stand der Technik verringert werden. Die dadurch gewonnenen Bereiche können zur Funktionsoptimierung des Einlass- und Auslassbereichs des Pumpengehäuses genutzt werden.

Vorteilhafterweise sind die Pumpenflügel an dem dem Gehäuse zugewandten Ende seitlich abgerundet, so dass diese schonend an den Dichtelementen vorbeigeführt werden können, ohne beschädigt zu werden.

Die Erfindung wird nachfolgend unter Bezugnahme der beiliegenden Zeichnungen näher erläutert.
- Fig. 1: zeigt einen Teilschnitt durch eine erfindungsgemäße Flügelzellenpumpe.
- Fig. 2: zeigt einen Längsschnitt durch eine erfindungsgemäße Flügelzellenpumpe.
- Fig. 3: zeigt eine perspektivische Darstellung einer Flügelzellenpumpe.

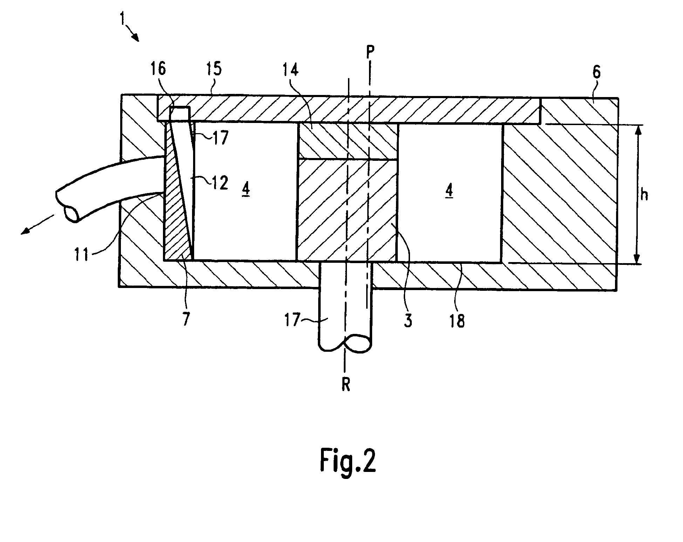

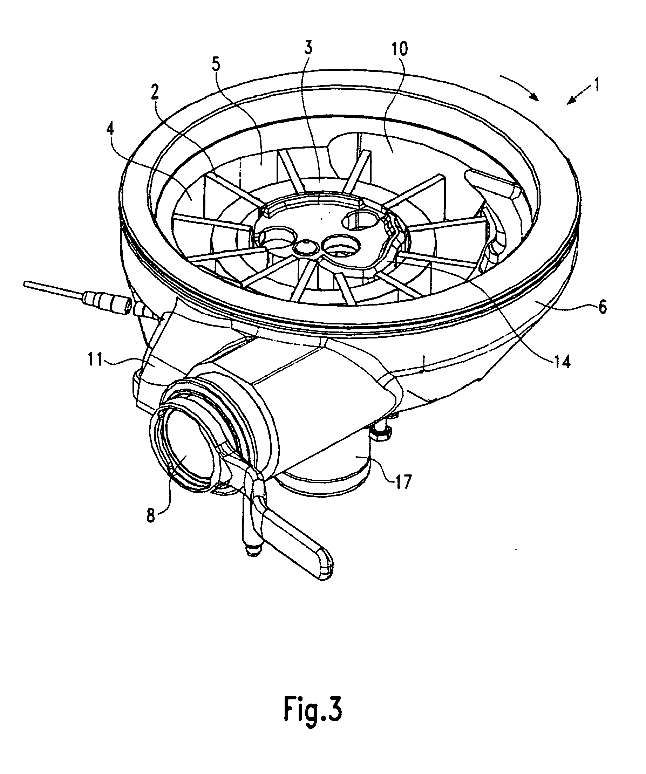

Fig. 3 zeigt den perspektivischen Aufbau der Flügelzellenpumpe 1 gemäß der vorliegenden Erfindung. Wie aus Fig. 3 hervorgeht, weist die Flügelzellenpumpe zum Fördem von pastösen Massen, insbesondere Wurstbrät, ein Pumpengehäuse 6 auf, sowie einen Einlass 10 für die pastöse Masse und einen Auslauf 8 für die portionierte Masse. Der Einlass 10 ist beispielsweise mit einem Auslass eines Trichters, z.B. Vakuumtrichters, (nicht dargestellt) verbunden, über den die pastöse Masse der Flügelzellenpumpe 1 zugeführt wird. Der Auslauf 8 ist beispielsweise mit einem Füllrohr (nicht dargestellt) einer Füllmaschine verbunden. Über das Füllrohr wird dann die portionierte pastöse Masse in bekannter Weise in die Wursthüllen geschoben. Die Flügelzellenpumpe 1 weist in dem Pumpengehäuse 6 einen vorzugsweise exzentrisch angeordneten, in Drehung versetzbaren Rotor 3 auf, der über eine Pumpenwelle 17 um die Achse R (siehe Fig. 2) angetrieben wird. Wie aus Fig. 2 zu erkennen ist, ist die Mittelachse R des Rotors von der Mittelachse P des Gehäuses 6 beabstandet.

Der Rotor weist radial verschiebbar gelagerte Flügel 2 auf, die mit der Wandung 5 des Pumpengehäuses 6, dem Boden 18 (siehe Fig. 2) des Gehäuses 6 sowie der Seitenscheibe 15, d.h. dem Deckel des Pumpengehäuses, Förderzellen 4 bilden und in abdichtendem Sinn zusammenwirken. Bei der in Fig. 3 gezeigten Ausführungsform weist die Flügelzellenpumpe eine Kurvenscheibe 14 auf, die die Pumpenflügel 2 an der Innenkontur des Pumpengehäuses 6 entlangführt. Durch Drehung des Rotors bzw. der Flügel 2 kann in bekannter Weise pastöse Masse in den Förderwerkskammem 4 vom Einlass 10 zum Auslauf 8 gefördert werden.

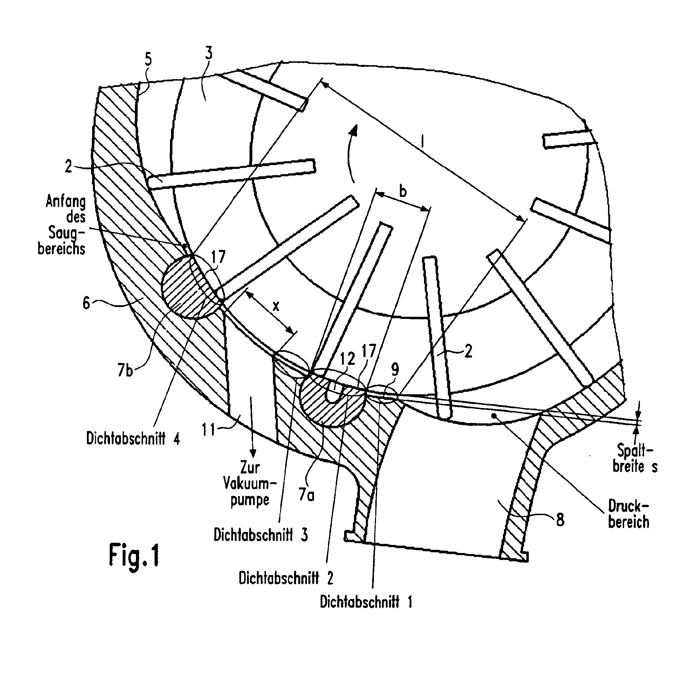

Eine Pumpe lässt sich allgemein in mehrere Bereiche einteilen. Einer dieser Bereiche ist der Saugbereich, ein weiterer ist der Druckbereich, wobei ein Dichtbereich den Druckbereich vom Saugbereich trennt. Der Druckbereich beginnt in Drehrichtung nach dem Einlass 10 und verläuft bis zum Auslauf 8.. Nach dem Druckbereich, der in Drehrichtung des Rotors 3 nach dem Auslauf 8 endet, schließt sich der Dichtbereich an, welcher den Druckbereich vom Saugbereich trennt. Nach dem Dichtbereich ist der Saugbereich angeordnet, wie aus Fig. 1 hervorgeht, der z.B. an einer Stelle beginnt, an der der Abstand zwischen Rotor 3 und Innenwand 5 des Gehäuses 6 zunimmt, derart, dass sich die Förderzellen 4 wieder vergrößern. Der Saugbereich verläuft bis zum Ende des Einlasses 10. Im Saugbereich herrschen Drücke von -1 bar bis 0 bar.

Wie insbesondere aus den Figuren 1 und 2 hervorgeht, ist im Dichtbereich, also zwischen Druckbereich und Saugbereich, mindestens ein Dichtelement 7a, b, vorgesehen, das den Spalt 9 zwischen Rotor und Wandung 5 des Pumpengehäuses 6 abdichtet. Das Dichtelement 7 kann fest, wird jedoch vorzugsweise lose, d.h. austausch- und reinigbar, in einer Aussparung im Gehäuse 6 aufgenommen. Dieses Dichtelement 7 kann zwischen Pumpengehäuse 6 und Rotor 3 elastisch vorgespannt eingebaut werden. Vorzugsweise wird das Dichtelement 7 jedoch starr eingebaut. Das Dichtelement kann aus einem weicheren und/oder elastischeren Material als die sonstigen Förderwerksteile gebildet sein, und somit als kostengünstiges Verschleißteil dienen. Das Dichtelement 7 hat die Aufgabe, den Spalt 9, abzudichten, um eine maximal mögliche Druckdifferenz zwischen Druck- und Saugbereich aufrecht zu erhalten. Eine weitere Aufgabe des Dichtelementes 7 ist die an den Umfangsflächen des Rotors mitgeführte Masse abzustreifen. Das Dichtelement ist hier also auch ein Abstreifelement. Die Höhe des Dichtelementes 7 entspricht vorzugsweise der Höhe des Rotors 3 bzw. der Flügel 2, wie aus Fig. 2 zu erkennen ist. Dadurch, dass das Dichtelement 7 austauschbar aufgenommen ist, kann es beim Verschleiß von Förderwerksteilen einfach ausgetauscht werden und an den Verschleiß angepasst werden, dadurch lässt sich je nach Anwendung die Lebensdauer der Pumpe erhöhen, ohne dass sehr teuere Komponenten, wie Pumpengehäuse, Pumpenflügel, Rotor etc. getauscht werden müssen.

Als Material für das Dichtelement kommt beispielsweise eines aus folgender Gruppe in Frage: Kunststoff, Gummi, Metall, etc.

Wie aus den Figuren 1 und 2 ersichtlich ist, weist vorzugsweise zumindest das Dichtelement 7a, das vor einem Vakuumansatz 11, der im Pumpengehäuse 6 angeordnet ist, einen Leckagekanal 12 auf. Der Vakuumansatz 11 führt zu einer Vakuumpumpe, um in den Förderzellen 4, die sich an dem Vakuumansatz vorbei bewegen, einen Unterdruck zu erzeugen. Damit die pastöse Masse, die an den Umfangsflächen des Rotors mitgeführt wird, und nicht über die Abstreifwirkung des Dichtelementes 7 abgestreift wurde, nicht in Richtung Vakuumansatz 11 weiter gefördert wird, ist der Leckagekanal 12 vorgesehen, der die mitgeführte Masse aufnehmen kann. Der Leckagekanal 12 ist zumindest teilweise in Richtung Rotor 3 geöffnet, so dass die mitgenommene Masse in die so ausgebildete Nut bzw. Öffnung gedrückt werden kann. Vorzugsweise erstreckt sich der Leckagekanal 12 bzw. die Nut oder Öffnung über die gesamte Höhe h des Dichtelementes 7. Wie aus Fig. 2 hervorgeht, ist der Kanal 12 mit einem Leckagekanal 16 in der Seitenscheibe 15, die das Gehäuse 6 abdeckt, verbunden, damit die mitgeführte pastöse Masse abgeführt werden kann. Es ist jedoch auch denkbar, dass der Leckagekanal 12 mit einem weiteren Kanal verbunden ist, der im Pumpengehäuse vorgesehen ist. Somit kann die Vakuumpumpe wirksam von schädlicher Leckmasse geschützt werden. Das Dichtelement 7 kann n-Dichtflächen oder Lippen 17 und n-1 dazwischen liegende Leckagekanäle 12 aufweisen (n ∈ IN). Vorteilhafterweise kommen die Dichtflächen 17 derart in Kontakt mit dem Rotor 3, dass der Rotor 3 an den Dichtflächen vorbei gleiten kann.

Wie aus Fig. 1 ersichtlich ist, ist in Drehrichtung hinter dem Vakuumansatz 11 ein weiteres Dichtelement 7b vorgesehen, das dazu dient, zwischen Vakuumansatz 11 und Saugbereich der Pumpe abzudichten.

Der Dichtbereich in diesem Ausführungsbeispiel, weist also einen ersten Dichtabschnitt auf, der durch einen Dichtspalt 9 zwischen Rotor 3 und Wandung 5 des Gehäuses 6 gebildet ist. Im Abschnitt 2 des Dichtbereichs ist dann mindestens ein Dichtelement vorgesehen, in Fig. 1 ein Dichtelement 7a. Vorzugsweise weist dieses Dichtelement mindestens einen Leckagekanal 12 auf, wie zuvor beschrieben. Der Dichtabschnitt 3 umfasst wieder einen Dichtspalt 9 mit entsprechender Spaltbreite s, wobei in diesem Dichtabschnitt 3 der Vakuumansatz 11 mit einer Länge X vorgesehen ist. Es folgt der vierte Dichtabschnitt, der wieder mindestens ein Dichtelement 7b umfasst, und der den Saugbereich vom Vakuumansatz 11 abdichtet. In Drehrichtung des Rotors 3 liegt dann hinter dem Dichtelement 7b der Saugbereich, in dem der Abstand zwischen Rotor und Wandung 5 zunimmt, um das Flügelzellenvolumen wieder zu erhöhen und pastöse Masse anzusaugen.

Die Dichtwirkung ist wesentlich von der Länge der Dichtelemente 7 abhängig. Wie aus der Fig. 1 hervorgeht, sind die Pumpenflügel 2 an ihrem dem Gehäuse 6 zugewandten Ende abgerundet ausgebildet, derart, dass sie gut über die Dichtelemente 7 gleiten können. Wenn die Flügel 2 im Übergang von Dichtabschnitt 1 zu Dichtabschnitt 2 bzw. von Dichtabschnitt 3 zu Dichtabschnitt 4 von der Wandung 5 auf die Dichtelemente 7 bewegt werden, bewegen sich die Pumpenflügel 2 entsprechend in Radialrichtung von dem Gehäuse weg. Die Dichtelemente 7 können dazu auch beispielsweise in den Übergangsbereichen zwischen den Dichtabschnitten leicht angeschrägt sein.

Die Dichtelemente 7 können auch eine Kombination aus Dichtflächen und Dichtlippen aufweisen.

Gemäß der vorliegenden Erfindung kann durch das Dichtelement 7 bzw. die Dichtelemente 7a, 7b die Spaltbreite s des Spaltes 9 zwischen Rotor 3 und Gehäuse 6 nach Wunsch eingestellt werden. Die Geometrie im Dichtabschnitt 2 kann durch Austausch des Dichtelementes variiert, und somit an unterschiedliche Betriebsarten mit unterschiedlichen Drücken, Medien etc. angepasst werden. Beim Verschleiß von Förderwerksteilen kann das Dichtelement 7 einfach ausgetauscht werden, so dass der Spalt wieder exakt abgedichtet werden kann, ohne dabei teuere Förderwerkskomponenten auszutauschen. Dadurch lässt sich je nach Anwendung die Lebensdauer der Pumpe wesentlich erhöhen.

Durch den Einsatz der Dichtelemente können die Leckageströme verringert und somit die Genauigkeit der Förderleistung, bzw. der Portionsgewichte der Pumpe auch bei unterschiedlichsten Betriebsbedingungen erhöht werden. Dadurch, dass sich das Dichtelement 7 an die Rotorgeometrie anpassen lässt, kann weitgehend unabhängig vom Verschleißzustand der Förderwerksteile eine hohe Genauigkeit der Förderleistung der Pumpe bzw. sehr genaue Portionsgewichte erreicht werden.

## Patentansprüche

1. Flügelzellenpumpe (1) zum Fördern von pastösen Massen, insbesondere Wurstbrät, mit einem Pumpengehäuse (6) und einem drehbar gelagerten Rotor (3), der radial verschiebbar gelagerte Flügel (2) umfasst, die mit der Wandung (5) des Pumpengehäuses (6) Förderzellen (4) bilden, mit einem Saugbereich, einem Druckbereich und einem Dichtbereich, der den Druckbereich vom Saugbereich trennt, und
im Dichtbereich mindestens ein Dichtelement (7) vorgesehen ist, zum Abdichten eines Spaltes (9) zwischen Rotor (3) und der Wandung (5) des Pumpengehäuses (6)
**dadurch gekennzeichnet, dass**
dass die Flügelzellenpumpe (1) im Dichtbereich im Gehäuse (6) einen Vakuumansatz (11) aufweist, wobei mindestens ein Dichtelement (7) in Drehrichtung vor dem Vakuumansatz (11) angeordnet ist.

2. Flügelzellenpumpe (1) nach Anspruch 1, **dadurch gekennzeichnet, dass** das Dichtelement (7) aus einem weicheren und/oder elastischerem Material als das Gehäuse (6), die Flügel (2) und der Rotor (3) gebildet ist.

3. Flügelzellenpumpe (1) nach mindestens einem der Ansprüche 1 oder 2, **dadurch gekennzeichnet, dass** das Gehäuse (6) eine Aussparung aufweist, in die das Dichtelement (7) auswechselbar eingefügt ist.

4. Flügelzellenpumpe (1) nach mindestens einem der Ansprüche 1 bis 3, **dadurch gekennzeichnet, dass** das Dichtelement (7) einen Leckagekanal (12), der zumindest teilweise in Richtung Rotor (3) geöffnet ist, aufweist, zum Abführen von pastöser Masse, die an den Umfangsflächen des Rotors (3) mitgeführt wird.

5. Flügelzellenpumpe (1) nach Anspruch 4, **dadurch gekennzeichnet, dass** der Leckagekanal (12) mit einem Leckagekanal (16) in einer Seitenscheibe (15), die das Gehäuse (6) abdeckt, oder mit einem Leckagekanal (12) im Gehäuse (6) in Verbindung steht, um die mitgeführte pastöse Masse abzuführen.

6. Flügelzellenpumpe (1) nach Anspruch 4 oder 5, **dadurch gekennzeichnet, dass** das Dichtelement (7) n-Dichtflächen oder Lippen (17) und n-1 dazwischen liegende Leckagekanäle 12 aufweist (n ∈ IN).

7. Flügelzellenpumpe (1) nach Anspruch 1, **dadurch gekennzeichnet, dass** mindestens ein weiteres Dichtelement (7) in Drehrichtung nach dem Vakuumansatz (11) angeordnet ist.

8. Flügelzellenpumpe (1) nach Anspruch 7, **dadurch gekennzeichnet, dass** der Dichtbereich folgenden Aufbau umfasst:
einen ersten Dichtabschnitt, mit einem ersten Dichtspalt (9), der zwischen Rotor (3) und Wandung (5) des Gehäuses (6) gebildet ist,
einen zweiten Dichtabschnitt mit mindestens einem ersten Dichtelement (7a),
einen dritten Dichtabschnitt mit einem zweiten Dichtspalt (9), der zwischen Rotor (3) und Wandung (5) des Gehäuses (6) gebildet ist
und einen vierten Dichtabschnitt, der mindestens ein weiteres Dichtelement (7b) umfasst.

9. Flügelzellenpumpe (1) nach Anspruch 8, **dadurch gekennzeichnet, dass** der Vakuumansatz (11) im dritten Dichtabschnitt angeordnet ist.

10. Flügelzellenpumpe (1) nach mindestens einem der Ansprüche 1 bis 9, **dadurch gekennzeichnet, dass** die Höhe h des Dichtelementes (7) der Höhe des Rotors und/oder der Pumpenflügel (2) entspricht.

11. Flügelzellenpumpe (1) nach mindestens einem der Ansprüche 1 bis 10 **dadurch gekennzeichnet, dass** die Pumpenflügel (2) an dem dem Gehäuse (6) zugewandten Ende seitlich abgerundet sind.

## Claims

1. A vane pump (1) for delivering pasty masses, in particular sausage meat, with a pump case (6) and a rotatably held rotor (3) comprising vanes (2) which are held so as to be radially movable and which form delivery cells (4) together with the wall (5) of the pump case (6), with a suction area, a pressure area and a sealing area separating the pressure area from the suction area, and
at least one sealing element (7) is provided in the sealing area for sealing a gap (9) between the rotor (3) and the wall (5) of the pump case (6),
**characterized in that**
the vane pump (1) comprises a vacuum extension (11) in the sealing area in the case (6), at least one sealing element (7) being arranged in the sense of rotation upstream of the vacuum extension (11)

2. The vane pump (1) according to claim 1, **characterized in that** the sealing element (7) is formed of a softer and/or more elastic material than the case (6), the vanes (2) and the rotor (3).

3. The vane pump (1) according to at least one of claims 1 or 2, **characterized in that** the case (6) comprises a recess into which the sealing element (7) is inserted so as to be replaceable.

4. The vane pump (1) according to at least one of claims 1 to 3, **characterized in that** the sealing element (7) comprises a leakage channel (12) opened at least partially towards the rotor (3) for removing pasty mass entrained at the circumferential surfaces of the rotor (3).

5. The vane pump (1) according to claim 4, **characterized in that** the leakage channel (12) is in communication with a leakage channel (16) in a side plate (15) covering the case (6), or with a leakage channel (12) in the case (6) to remove the entrained pasty mass.

6. The vane pump (1) according to claim 4 or 5, **characterized in that** the sealing element (7) comprises n-sealing surfaces or lips (17) and n-1 leakage channels (12) situated in-between (n ∈ IN).

7. The vane pump (1) according to claim 1, **characterized in that** at least one further sealing element (7) is arranged in the sense of rotation downstream of the vacuum extension (11).

8. The vane pump (1) according to claim 7, **characterized in that** the sealing area comprises the following structure:
a first sealing section with a first sealing gap (9) formed between the rotor (3) and the wall (5) of the case (6),
a second sealing section with at least one first sealing element (7a),
a third sealing section with a second sealing gap (9) formed between the rotor (3) and the wall (5) of the case (6).
and a fourth sealing section comprising at least one further sealing element (7b).

9. The vane pump (1) according to claim 8, **characterized in that** the vacuum extension (11) is arranged in the third sealing section.

10. The vane pump (1) according to at least one of claims 1 to 9, **characterized in that** the height h of the sealing element (7) corresponds to the height of the rotor and/or the pump vanes (2).

11. The vane pump (1) according to at least one of claims 1 to 10, **characterized in that** the pump vanes (2) are laterally rounded at their ends facing the case (6).

## Revendications

1. Pompe à palettes (1) pour le transport de masses pâteuses, en particulier de chair à saucisses, comprenant un corps de pompe (6) et un rotor (3) monté tournant, qui comporte des ailettes (2) montées mobiles dans la direction radiale, lesquelles ailettes forment avec la paroi, (5) du corps de pompe (6) des cellules de transport (4), une zone d'aspiration, une zone de refoulement et une zone d'étanchéité, qui sépare la zone de refoulement de la zone d'aspiration, et
au moins un élément d'étanchéité (7) étant prévu dans la zone d'étanchéité, pour l'étanchéification d'une fente (9) entre le rotor (3) et la paroi (5) du corps de pompe (6),
**caractérisée en ce que**
la pompe à palettes (1) présente dans la zone d'étanchéité, dans le corps (6), un embout à vide (11), au moins un élément d'étanchéité (7) étant disposé dans la direction de rotation en amont de l'embout à vide (11).

2. Pompe à palettes (1) suivant la revendication 1, **caractérisée en ce que** l'élément d'étanchéité (7) est formé d'un matériau plus souple et/ou plus élastique que le corps (6), les ailettes (2) et le rotor (3).

3. Pompe à palettes (1) suivant l'une au moins des revendications 1 et 2, **caractérisée en ce que** le corps (6) présente un évidement, dans lequel est inséré de façon interchangeable l'élément d'étanchéité (7).

4. Pompe à palettes (1) suivant l'une au moins des revendications 1 à 3, **caractérisée en ce que** l'élément d'étanchéité (7) comporte un canal de fuite (12), ouvert au moins en partie en direction du rotor (3), pour l'évacuation de masse pâteuse entraînée sur les surfaces périphériques du rotor (3).

5. Pompe à palettes (1) suivant la revendication 4, **caractérisée en ce que** le canal de fuite (12) est en liaison avec un canal de fuite (16) dans un disque latéral (15), qui recouvre le corps (6), ou avec un canal de fuite (12) dans le corps (6), afin d'évacuer la masse pâteuse entraînée.

6. Pompe à palettes (1) suivant l'une des revendications 4 et 5, **caractérisée en ce que** l'élément d'étanchéité (7) comporte n portées de joint ou lèvres (17) et n-1 canaux de fuite (12) intermédiaires (n ∈ IN).

7. Pompe à palettes (1) suivant la revendication 1, **caractérisée en ce qu'**au moins un autre élément d'étanchéité (7) est disposé dans la direction de rotation en aval de l'embout à vide (11).

8. Pompe à palettes (1) suivant la revendication 7, **caractérisée en ce que** la zone d'étanchéité comprend la structure suivant
une première section d'étanchéité avec une première fente d'étanchéité (9), formée entre le rotor (3) et la paroi (5) du corps (6),
une deuxième section d'étanchéité avec au moins un premier élément d'étanchéité (7a),
une troisième section d'étanchéité avec une deuxième fente d'étanchéité (9), formée entre le rotor (3) et la paroi (5) du carter (6),
et une quatrième section d'étanchéité, qui comprend au moins un autre élément d'étanchéité (7b).

9. Pompe à palettes (1) suivant la revendication 8, **caractérisée en ce que** l'embout à vide (11) est disposé dans la troisième section d'étanchéité.

10. Pompe à palettes (1) suivant l'une au moins des revendications 1 à 9, **caractérisée en ce que** la hauteur h de l'élément d'étanchéité (7) correspond à la hauteur du rotor et/ou des ailettes de pompe (2).

11. Pompe à palettes (1) suivant l'une au moins des revendications 1 à 10, **caractérisée en ce que** les ailettes de pompe (2) sont arrondies latéralement sur l'extrémité tournée vers le corps (6).
